# EUROPÄISCHE PATENTANMELDUNG

(11) **EP 1 386 952 A2**
(43) Veröffentlichungstag der Anmeldung: **04.02.2004**
(21) Anmeldenummer: 03016494.1
(22) Anmeldetag: 22.07.2003
(51) Int. Cl.: C09K 5/20

(54) **Gefrierschutzmittel**

(30) Priorität: 02.08.2002 DE 10235390; 11.02.2003 DE 10305518
(71) Anmelder: Clariant GmbH, 65929 Frankfurt am Main (DE)
(72) Erfinder: Hafner, Markus, Dr., 84556 Kastl (DE); Stockbauer, Gisela, 84489 Burghausen (DE); Pfüller, Oliver, Dr., 65843 Sulzbach (DE); Stankowiak, Achim, Dr., 84503 Altötting (DE)
(74) Vertreter: Mikulecky, Klaus

(57) **Zusammenfassung**

Vorliegende Erfindung betrifft Gefrierschutzmittelkonzentrate, enthaltend
a) 0,05 bis 10 Gew.-% eines oder mehrerer sulfonierter oder sulfatierter Polyglykole der Formel

   R - (O)ₗ - (A-O)ₘ - (CH₂)ₖ - SO₃X

   mit
   - A: C₂- bis C₄-Alkylen,
   - R: H, C₁- bis C₁₀-Alkyl, C₂- bis C₂₀-Alkenyl, C₆- bis C₁₈-Aryl
   - X: H, Alkali- oder Erdalkalimetall
   - k: eine Zahl von 0 bis 10
   - l: 0 oder 1,
   - m: eine Zahl von 1 bis 200,
b) 0,05 bis 5 Gew.-% eines oder mehrerer Carbamate der Formel 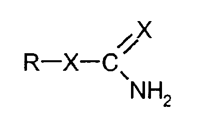 mit
   - X: O, S,
   - R: C₁- bis C₈-Alkyl oder C₆- bis C₁₈-Aryl
   oder ein entsprechendes Ammoniumsalz,
c) 0,05 bis 5 Gew.-% eines aliphatischen oder aromatischen Amins,
d) 0,01 bis 1 Gew.-% eines Kohlenwasserstofftriazols,
e) Alkylenglykole ad 100 Gew.-%.

## Beschreibung

Die vorliegende Erfindung betrifft ein Gefrierschutzmittelkonzentrat zum Schutz vor Korrosion von Kühl- und Heizkreisläufen aus Leichtmetallen, beispielsweise von Leichtmetall-Verbrennungsmotoren (insbesondere Magnesium- und Aluminiummotoren) für den Automobilbereich auf Basis von sulfonierten oder sulfatierten Polyglykolen, sowie Carbamaten, Triazolen, Aminen und anderen Zusätzen.

Magnesium und Magnesiumlegierungen finden als Konstruktionswerkstoff vor allem in der Luftfahrt- und Automobilindustrie Verwendung. Die Automobilindustrie ist seit Jahren bestrebt, die durch immer mehr Extras wie Klimaanlagen, Sicherheitssysteme, etc. bedingten Gewichtszunahmen im Fahrzeug durch Leichtbaumaterialien auszugleichen. In diesem Zusammenhang sei insbesondere auf die signifikanten Unterschiede im spezifischen Gewicht der im Automobilsektor gängigen Konstruktionsmetalle hingewiesen:

| | |
|---|---|
| Stahl | 7,8 g/cm³ |
| Aluminium | 2,7 g/cm³ |
| Magnesium | 1,8 g/cm³ |

Bezüglich einer Gewichtsreduzierung im Fahrzeug scheint mit Magnesium der ideale Werkstoff gefunden zu sein. Zusätzliche positive Eigenschaften von Magnesiumlegierungen, wie z.B. die gute Gießbarkeit, Eignung zum Druckguß, die gute Schweißbarkeit und die relativ hohe Festigkeit, machen eine zunehmende Anwendung von Magnesium bzw. Magnesiumlegierungen verständlich.

Inzwischen werden Magnesiumlegierungen sowohl im Karosseriebau, als auch im Motorenbau eingesetzt. So stehen Magnesiummotoren namhafter Automobilhersteller kurz vor der Serienreife.

Kühlerfrostschutzmittel enthalten als Hauptbestandteil im allgemeinen Ethylenglykoloder Propylenglykol (allgemein: Alkylenglykole), um den Gefrierpunkt abzusenken.

Zur Anwendung im Kühlkreislauf werden die entsprechenden Kühlerfrostschutzkonzentrate mit Wasser verdünnt. Die Verdünnung mit Wasser soll hierbei für optimale Wärmeabfuhr sorgen.

Aufgrund der Korrosivität der beschriebenen Kühlmittel - insbesondere bei höheren Betriebstemperaturen - werden dem Kühlmittelkonzentrat korrosionsschützende Zusätze beigemengt. Speziell bei relativ unedlen Metallen wie Aluminium oder Magnesium und deren Legierungen sind solche Zusätze unerlässlich, um einen dauerhaft problemlosen Kühlmitteleinsatz gewährleisten zu können. Magnesium stellt den zur Zeit unedelsten Konstruktionswerkstoff im Motorenbau dar.

Neben den bereits erwähnten Hauptwerkstoffen Magnesium und Aluminium müssen im Kühlkreislauf auch weitere Metalle vor Korrosion geschützt werden. Dies sind in der Regel Eisen bzw. Stahl, Gusseisen (Grauguss), Kupfer, Messing, Blei, Zinn, Zink und deren Legierungen (z.B. Weichlot).

Der Kühlkreislauf kann von den verschiedensten Korrosionsarten wie Lochfraß, Spaltkorrosion oder Kavitation betroffen sein. Zum effektiven Schutz vor den beschriebenen Korrosionsarten sind bereits zahlreiche Frostschutzmittel bekannt, nicht aber für die Anwendung in Magnesiummotoren.

Bezüglich der Korrosionsinhibierung bei Magnesiummotoren ist der Stand der Technik in WO-02/08354, WO-00/22189 und WO-98/20186 beschrieben. Danach beruht die Korrosionsinhibierung vor allem auf der Kombination von Mono- und Dicarbonsäuren, Amiden, Fluoriden, Triazolen oder Thiazolen, Phosphaten und wasserlöslichen Molybdän-Salzen.

WO-02/08354 offenbart Gefrierschutzmittelkonzentrate auf Basis von Alkylenglykolen oder deren Derivaten oder von Glycerin, enthaltend 0,05 bis 10 Gew.-%, bezogen auf die Gesamtmenge des Konzentrates, eines oder mehrerer Carbonsäureamide und/oder Sulfonsäureamide.

WO-02/20186 offenbart ein Korrosionsschutzmittel, umfassend eine wässrige Lösung von Fluoriden, Zitronensäure, Phosphaten, eine Hydroxylaminquelle und ein Oxidationsmittel.

In DE-A-19654642 werden unter anderem sulfonierte organische Moleküle mit einer geradkettigen Struktur beschrieben, die in einer wässrigen Lösung zur Behandlung metallischer Oberflächen eingesetzt werden und als Haftvermittlermoleküle für das spätere Aufbringen einer Lack- oder Kunststoffschicht bzw. von Klebstoffen dienen sollen.

Da speziell in Magnesiummotoren bei höheren Betriebstemperaturen die Festigkeit des Werkstoffes signifikant abnimmt, spielt eine optimierte Wärmeabfuhr für die Lebensdauer der Motoren eine entscheidende Rolle. Dies kann zum Großteil durch eine Erhöhung des Wasseranteils in der gebrauchsfertigen Frostschutzmischung erreicht werden, weil Wasser von allen flüssigen und festen Stoffen über die höchste spezifische Wärmekapazität verfügt.

Ein erhöhter Wasseranteil führt aber sehr oft infolge unzureichender Inhibierung zu fatalen Korrosionsabträgen am Metall, weil Wasser - speziell bei der Verwendung in Magnesiummotoren - mit den intermetallisch gebildeten Metallhydriden MgH₂ zum Hydroxid Mg(OH)₂ reagiert, dessen Stabilität maßgeblich vom pH-Wert des Mediums abhängt und bei pH-Werten um den Neutralpunkt sehr gering ist.

Darüber hinaus führt die Verwendung von Carbonsäuren oder Phosphaten in höheren Konzentrationen und bei erhöhten Temperaturen oft zu beachtlichen Metallaufträgen, die einen erheblich schlechteren Wärmeübergang zur Folge haben, weil der Kontakt der Metalloberfläche zum Kühlmedium abnimmt. Auch in diesem Fall muss mit einer Überhitzung des Motors und weiteren, daraus abgeleiteten Folgen gerechnet werden.

Die meisten wasserlöslichen Fluorid-Verbindungen sind aufgrund ihrer Toxizität nicht mehr akzeptabel und deshalb für einen Einsatz in Frostschutzmitteln ungeeignet.

Die bisher beschriebenen Kühlmittel erschienen aufgrund der geschilderten Nachteile verbesserungswürdig.

Aufgabe vorliegender Erfindung war es, ein Frostschutzmittelkonzentrat mit einer Kombination aus korrosionsinhibierenden Zusätzen bereitzustellen, die auch bei höheren Betriebstemperaturen die benetzten Metalloberflächen wirksam und nachhaltig vor Korrosion zu schützen vermögen, ohne durch die Art und Eigenschaften der Zusätze einen nennenswert erhöhten Massenauftrag auf der Metalloberfläche zu bewirken.

Überraschenderweise konnte nun gezeigt werden, dass sich die Verbindungsklasse der sulfonierten oder sulfatierten Polyglykole zur Korrosionsinhibierung an Magnesium- und Aluminiummetallen durch ein Kühlmedium sehr gut eignet. Das neuartige wässrige Kühlmedium verbessert entscheidend die Korrosionsinhibierung in Kühlkreisläufen von Verbrennungsmotoren, beispielsweise von Automobilen, oder in industriellen Kühl- bzw. Heizkreisläufe aus Magnesium/-legierungen oder Aluminium/-legierungen.

Gegenstand der Erfindung sind somit Gefrierschutzmittelkonzentrate, enthaltend
a) 0,05 bis 10 Gew.-% eines oder mehrerer sulfonierter oder sulfatierter Polyglykole der Formel

   R - (O)ₗ - (A-O)ₘ - (CH₂)ₖ - SO₃X

   mit
   - A: C₂- bis C₄-Alkylen,
   - R: H, C₁- bis C₁₀-Alkyl, C₂- bis C₂₀-Alkenyl, C₆- bis C₁₈-Aryl
   - X: H, Alkali- oder Erdalkalimetall
   - k: eine Zahl von 0 bis 10
   - l: 0 oder 1,
   - m: eine Zahl von 1 bis 200,
b) 0,05 bis 5 Gew.-% eines oder mehrerer Carbamate der Formel 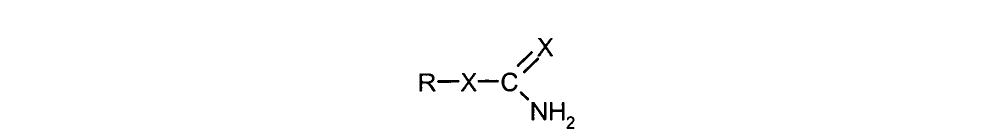 mit
   - X: O, S,
   - R: C₁- bis C₈-Alkyl oder C₆- bis C₁₈-Aryl
   oder ein entsprechendes Ammoniumsalz,
c) 0,05 bis 5 Gew.-% eines aliphatischen oder aromatischen Amins,
d) 0,01 bis 1 Gew.-% eines Kohlenwasserstofftriazols,
e) Alkylenglykole ad 100 Gew.-%.
   Weiter können die Gefrierschutzmittelkonzentrate in bevorzugten Ausführungsformen zusätzlich folgende Verbindungen enthalten:
f) bis zu 4 Gew.-% Wasser,
g) 0,05 bis 2 Gew.-%, vorzugsweise 0,1 bis 0,5 Gew.-%, eines Alkalimetallsilikats, gegebenenfalls in stabilisierter Form, und/oder
h) jeweils bis zu 1 Gew.-% eines oder mehrerer Alkalimetallphosphate, Alkalimetallphosphonate, Alkalimetallborate, Alkalimetallnitrite oder -nitrate, Alkalimetallfluoride, Alkalimetall- oder Ammoniummolybdate und/oder
i) 0,05 bis 5 Gew.-%, vorzugsweise 0,1 bis 3 Gew.-%, einer Mischung aus Mono- und/oder Dicarbonsäuren mit jeweils 4 bis 16 C-Atomen, die in Form von deren Alkalimetall- oder Ammoniumsalzen vorliegen, und/oder
j) bis zu 1 Gew.-% an geeigneten Hartwasserstabilisatoren.

Alle Angaben in Prozenten stehen für Gewichtsprozente.

Ein weiterer Gegenstand der Erfindung ist die Verwendung der oben genannten Zusammensetzung als korrosionsinhibierendes Gefrierschutzmittel in Heiz- und Kühlkreisläufen, insbesondere solchen aus Magnesium, Aluminium oder deren Legierungen. Besonders bevorzugt ist die Verwendung der oben genannten Zusammensetzung in Automobil-Kühlkreisläufen.

Ein weiterer Gegenstand der Erfindung ist ein Verfahren zur Korrosionsinhibierung und zum Gefrierschutz in Heiz- und Kühlkreisläufen, insbesondere solchen aus Magnesium, Aluminium oder deren Legierungen, indem die oben genannten Zusammensetzung als korrosionsinhibierendes Gefrierschutzmittel verwendet wird.

Bestandteil a) ist vorzugsweise in Mengen von 0,05 bis 2 % vorhanden. X steht vorzugsweise für ein Alkalimetall. k steht vorzugsweise für 0 oder eine Zahl von 2 bis 10. Steht k für 0, so stellen die Verbindungen gemäß a) Sulfate dar. Steht k nicht für 0, so stellen die Verbindungen gemäß a) Sulfonate dar. Die Summe aus k+l beträgt in einer bevorzugten Ausführungsform entweder 0 oder 2 bis 11.

A steht vorzugsweise für eine Ethylengruppe oder Propylengruppe. Die Alkoxygruppe (A-O) kann vorzugsweise für eine reine Ethylenoxidgruppe, eine reine Propylenoxidgruppe oder eine gemischte Ethylenoxid-Propylenoxidgruppe stehen. Steht (A-O) für eine gemischte Alkoxygruppe, so ist eine random-Gruppe gegenüber einer block-Gruppe bevorzugt. Sofern (A-O) für eine gemischte Alkoxygruppe steht, so umfasst diese vorzugsweise zwischen 1 und 50 Ethylenoxidgruppen und 1 bis 50 Propylenoxidgruppen, insbesondere zwischen 11 und 22 Ethylenoxidgruppen und 3 bis 7 Propylenoxidgruppen.

m steht vorzugsweise für eine Zahl von 1 bis 50, vorzugsweise von 2 bis 40, insbesondere von 11 bis 22.

Bestandteil b) ist vorzugsweise in Mengen von 0,05 bis 2 Gew.-% vorhanden. Beispiele für geeignete Carbamate sind Methylcarbamat, Benzylcarbamat, Ammoniumcarbamat, Dimethylammoniumdimethylcarbamat. In einer besonders bevorzugten Ausführung der Erfindung findet Methylcarbamat seinen Einsatz, insbesondere in Kombination mit einem Alkalisalz als Bestandteil a).

Als Bestandteil c) kommen aliphatische und aromatische Amine mit vorzugsweise 2 bis 20 C-Atomen in Frage. Dies schließt auch cycloaliphatische Verbindungen ein. Generell können diese Amine auch andere funktionelle Gruppen enthalten, wie z.B. eine oder mehrere Hydroxylgruppen, Etherfunktionen oder Sulfonsäuregruppen. In einer bevorzugten Ausführungsform werden Diisopropylamin (DIPA), Isopropylamin oder Triethanolamin verwendet. Die erfindungsgemäße Zusammensetzung enthält vorzugsweise 0,1 bis 2 % Amine.

Als Bestandteil d) kommt vorzugsweise ein Kohlenwasserstofftriazol wie Tolyltriazol, Benzotriazol, aber auch geeignete Imidazole oder Pyrimidine in Frage. Vorzugsweise enthält die erfindungsgemäße Zusammensetzung 0,05 bis 2 % Triazole.

Zusätzlich können die erfindungsgemäßen Gefrierschutzmittelkonzentrate auch Zusätze wie unter g) bis j) beschrieben enthalten.

Der pH-Wert der Gefrierschutzmittelkonzentrate liegt bevorzugt zwischen 5 und 12.

Die vorliegende Erfindung umfasst auch gebrauchsfertige, wässrige Mischungen des Gefrierschutzmittelkonzentrates mit einem Wasseranteil von 10 bis 90 Gew.-%, insbesondere 10 bis 70 Gew.-%.

Das erfindungsgemäße korrosionsinhibierende Gefrierschutzmittelkonzentrat eignet sich insbesondere für die Anwendung in Leichtmetallmotoren wie Aluminiummotoren, Magnesiummotoren oder Motoren aus Magnesiumlegierungen (Magnesium-Aluminium, Aluminium-Magnesium, Magnesium-Seltene Erden, Magnesium-Mangan wie z. B. AZ 91, AE 42, AM 20, AM 50 oder AM 60).

### Beispiele

In Tabelle 1 werden als Beispiele 1 bis 8 die Inhaltsstoffe verschiedener Kühlerfrostschutzmittel (gebrauchsfertig mit 30 bzw. 50 Gew.-% Wasser abgemischt) gegenübergestellt.

Zur Ermittlung der Korrosionsstabilität mittels Heißkorrosionstest wurden alle Magnesium-Prüfkörper aus AZ 91 (HP)-Masseln gedreht. Die Metallprüfkörper entsprechen in ihren Abmessungen den Vorgaben nach ASTM D 4340 bzw. FVV. Eine Selektion nach lunker- und defektfreien Proben fand nicht statt, um eine möglichst realitätsnahe Untersuchungssituation zu schaffen.

Die Bedingungen für den Heißkorrosionstest sind: Temperatur der Prüfflüssigkeit 80°C, Prüfzeit 47 h, Konzentration siehe Tabelle 1, Umwälzgeschwindigkeit 260 l/h, Heizflächenbelastung 60 W/cm².

Zum Reinigen der Metalloberflächen nach dem Heißkorrosionstest ("Beizen") wurde Chromsäure verwendet. Die Massenveränderung der Magnesiumprobekörper wurde durch Differenzwägung bestimmt. Die in Tabelle 2 berichteten Massenveränderungen stellen den arithmetischen Durchschnitt aus jeweils 4 Prüfläufen dar. Anzustreben war ein möglichst geringer Massenabtrag.

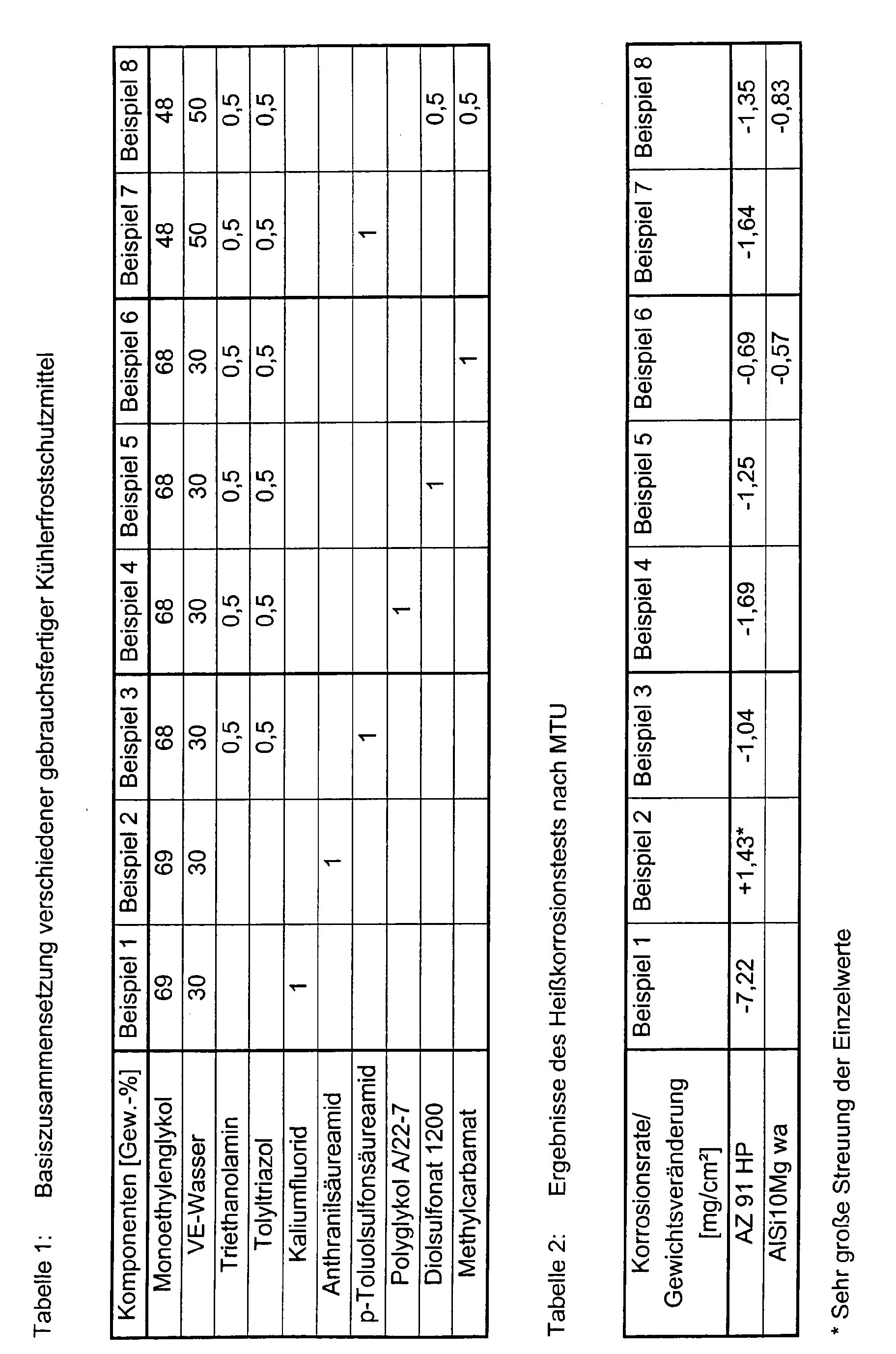

## Patentansprüche

1. Gefrierschutzmittelkonzentrate, enthaltend
a) 0,05 bis 10 Gew.-% eines oder mehrerer sulfonierter oder sulfatierter Polyglykole der Formel
R - (O)ₗ - (A-O)ₘ - (CH₂)ₖ - SO₃X
mit
A C₂- bis C₄-Alkylen,
R H, C₁- bis C₁₀-Alkyl, C₂- bis C₂₀-Alkenyl, C₆- bis C₁₈-Aryl
X H, Alkali- oder Erdalkalimetall
k eine Zahl von 0 bis 10
l 0 oder 1,
m eine Zahl von 1 bis 200,
b) 0,05 bis 5 Gew.-% eines oder mehrerer Carbamate der Formel 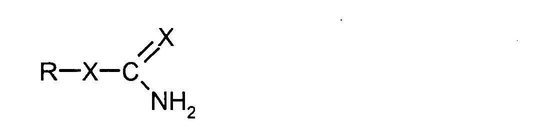 mit
X O, S
R C₁- bis C₈-Alkyl oder C₆- bis C₁₈-Aryl
oder ein entsprechendes Ammoniumsalz,
c) 0,05 bis 5 Gew.-% eines aliphatischen oder aromatischen Amins,
d) 0,01 bis 1 Gew.-% eines Kohlenwasserstofftriazols,
e) Alkylenglykole ad 100 Gew.-%.

2. Gefrierschutzmittelkonzentrat gemäß Anspruch 1, worin m für eine Zahl von 1 bis 50 steht.

3. Gefrierschutzmittelkonzentrat gemäß Anspruch 1 und/oder 2, worin m für eine Zahl von 2 bis 40 steht.

4. Gefrierschutzmittelkonzentrat gemäß einem oder mehreren der Ansprüche 1 bis 3, worin das Amin von Bestandteil c) 1 bis 20 Kohlenstoffatome umfasst.

5. Gefrierschutzmittelkonzentrat gemäß einem oder mehreren der Ansprüche 1 bis 4, worin von 0,05 bis 2 Gew.-% Alkalimetallsilikate enthalten sind.

6. Gefrierschutzmittelkonzentrat gemäß einem oder mehreren der Ansprüche 1 bis 5, worin bis zu 1 Gew.-% Alkalimetallphosphate, -phosphonate, -borate, -nitrite, -nitrate, -fluoride oder -molybdate oder Ammoniummolybdate enthalten sind.

7. Gefrierschutzmittelkonzentrat gemäß einem oder mehreren der Ansprüche 1 bis 6, worin 0,05 bis 5 Gew.-% einer Mischung aus C₄- bis C₁₆-Mono- und Dicarbonsäuren enthalten sind, die als Alkalimetall- oder Ammoniumsalz vorliegen.

8. Gefrierschutzmittelkonzentrat gemäß einem oder mehreren der Ansprüche 1 bis 7, worin der pH-Wert zwischen 5 und 12 liegt.

9. Gefrierschutzmittel, enthaltend 90 bis 10 Gew.-% eines Konzentrats gemäß einem oder mehreren der Ansprüche 1 bis 8 und Wasser ad 100 Gew.-%.
